# EUROPEAN PATENT APPLICATION

(11) **EP 1 574 696 A2**
(43) Date of publication of application: **14.09.2005**
(21) Application number: 05251457.7
(22) Date of filing: 10.03.2005
(51) Int. Cl.: F02D 41/20

(54) **Power supply arrangement for a fuel injector drive circuit**

(30) Priority: 10.03.2004 EP 04251359
(71) Applicant: Delphi Technologies, Inc., Troy, MI 48007 (US)
(72) Inventor: Baker, Nigel P., Sturry, Canterbury Kent CT2 0LT (GB); Martin, Steve J., Sturry, Canterbury Kent CT2 0NJ (GB)
(74) Representative: Hopley, Joanne Selina

(57) **Abstract**

The invention relates to a power supply arrangement (60,70,80) for an injector drive circuit (12) configured to operate in an energy recovery mode. The power supply arrangement receives an input voltage and includes: voltage boost means (24,124) for increasing the input voltage to a power supply output voltage (V_{SUPPLY}), switch means (28;28a,28b,28c) operable between open and closed states to control current flow through said voltage boost means (24,124), and a controller (14) for generating at least one control signal (130; 230,64,130A,130B,130C) for the switch means to control switch status. The controller (14) includes a predictive control algorithm for receiving an input signal that is representative of an injection running condition and for adjusting a parameter of the control signal in dependence upon the injection running condition, thereby to regulate the power supply output voltage (V_{SUPPLY}).

## Description

### Technical Field

The invention relates to a power supply arrangement for an injector drive circuit, in particular an injector drive circuit of the type used in a compression ignition internal combustion engine. The invention relates particularly to a power supply arrangement for use with an injector drive circuit for a piezoelectric injector arrangement. The invention also relates to a method for supplying an output voltage to an injector drive circuit of the aforementioned type and to a control system for such an injector drive circuit, including a power supply arrangement and a primary controller or primary microprocessor.

### Background Art

Automotive vehicle engines are generally equipped with fuel injectors for injecting fuel (e.g. gasoline or diesel fuel) into the individual cylinders or intake manifold of the engine. The fuel injectors are coupled to a fuel rail containing high pressure fuel that is delivered by way of a fuel delivery system. The injectors typically employ a valve needle that is actuated to open and close so as to control the amount of high pressure fuel metered from the fuel rail and injected into the corresponding engine cylinder or intake manifold.

One type of fuel injector that offers precise metering of fuel is the piezoelectric fuel injector. Piezoelectric fuel injectors employ piezoelectric actuators including a stack of piezoelectric elements. With a piezoelectric fuel injector, the metering of fuel is generally achieved by controlling the electrical voltage potential, or charge, applied to the piezoelectric elements so as to vary the degree to which the stack extends and contracts. The extent of expansion and contraction of the piezoelectric elements varies the extent and direction of travel of the valve needle, towards and away from a valve needle seating, so as to control the duration for which injection occurs at a given fuel pressure. Control of the piezoelectric actuator therefore controls the fuel delivery quantity.

In order to inject fuel, so as to provide an "injection event", the piezoelectric actuator undergoes a discharge phase, and subsequently a charge phase. In one type of piezoelectric injector (positive-charge displacement injectors), the injector is configured such that charging of the actuator stack causes the needle to lift away from the valve needle seating to start the injection event, with discharging of the actuator stack causing the needle to seat to end the injection event. In another type of piezoelectric injector (negative-charge displacement injectors) it is discharging of the actuator stack that causes the needle to lift, with charging of the stack causing the valve needle to seat. The injector is said to be "opened" when injection occurs, and "closed" when injection does not occur.

Charge and discharge of piezoelectric injectors may be controlled using a mainly hardware-implemented drive circuit (the injector drive circuit), including an inductor connected in series with the injectors and charge and discharge switches which are activated to charge and discharge the injectors. Each injector also has an associated select switch which is activated to select the associated switch for charging or discharge. Such a drive circuit is described in the Applicant's co-pending European patent application no. EP 1400677.

To charge an injector using the drive circuit, the charge switch is activated to connect a selected injector to a positive high voltage power supply via the inductor. Activation of the charge switch causes the current in the inductor to rise and the piezoelectric stack of the selected injector starts to charge. When the current in the inductor reaches a predetermined current threshold, the charge switch is deactivated and the current is allowed to decay into the piezoelectric stack via a flyback diode, so that charging of the selected injector continues. This is referred to as the 'recirculation phase', or the 'energy recovery phase, of the charging operation. The charge switch is alternately activated and deactivated in this manner until a charge voltage level is achieved. The discharge phase operates in a similar manner. A discharge switch is alternately activated and deactivated until a discharge voltage level is achieved across the injector, with energy that is removed from the injector being returned to a reservoir capacitor (or capacitors). The recirculation phase of operation is particularly beneficial as it enables energy that is removed from the injector during the discharge phase to be recovered and re-used, providing enhanced efficiency.

The high voltage power supply for the drive circuit typically takes the form of a switch mode power supply (SMPS). The SMPS includes a PWM (pulse width modulation) controller which provides a regulated voltage output based on the measured voltage drop across the SMPS output terminals, which are in connection with the drive circuit input. The PWM controller provides a PWM switch control signal to control a power supply switch. The PWM duty cycle (i.e. the ON/OFF ratio of the signal) and frequency of switching are varied by the PWM switch control signal in dependence upon a feedback signal from the SMPS voltage output.

In the event that a voltage increase is measured at the SMPS voltage output, the PWM controller reduces the PWM duty cycle to prevent an over-voltage condition occurring. When a decreasing voltage is detected at the output, the PWM controller increases the PWM duty cycle. It is important that the output voltage is maintained at a substantially constant level, or at least is not allowed to drop substantially below the constant voltage level, so as to ensure consistent and accurate injector operation.

Due to the fast dynamic response of the SMPS, when energy is being returned from the injector stack to the reservoir capacitor(s) during the recirculation phase, the voltage across the output terminals start to increase. As a consequence, the PWM controller adjusts the SMPS duty cycle, eventually causing the SMPS to switch off altogether. The abrupt re-switching on of the SMPS is disadvantageous and inefficient.

It has thus been recognised that existing SMPS units are not suitable for use with drive circuits which operate in the aforementioned energy recovery mode. It is an object of the present invention to provide a power supply arrangement for an injector drive circuit of the aforementioned type, which alleviates or avoids this problem.

### Summary of the Invention

According to a first aspect of the present invention there is provided a power supply arrangement for an injector drive circuit configured to operate in an energy recovery mode, the power supply arrangement receiving an input voltage and including: voltage boost means for increasing the input voltage to a power supply output voltage; switch means operable between open and closed states to control current flow through said voltage boost means, the switch means including a PWM controller and an ON/OFF switch; and a primary controller for generating at least one control signal for the switch means to control switch status, wherein the primary controller includes an injection control algorithm for controlling injection, wherein the injection control algorithm is arranged to generate an indication of an injection running condition, and a predictive control algorithm for receiving at least one input signal that is representative of the injection running condition and for adjusting at least one parameter of the at least one control signal in dependence upon the injection running condition, thereby to regulate the power supply output voltage, wherein the predictive control algorithm provides a control signal for the PWM controller in dependence upon the injection running condition, and wherein the PWM controller is configured to provide a PWM switch control signal for the ON/OFF switch in response to said control signal, wherein the PWM switch control signal is adjusted in response to the current feedback signal exceeding a predetermined safe current level, the PWM controller being arranged to receive a current feedback signal indicative of current flow through the ON/OFF switch, and wherein the predictive control algorithm is further configured so as to provide a modifying current signal, the power supply arrangement further comprising: a current combiner means for combining said current feedback signal with the modifying current signal, whereby the PWM controller generates the PWM switch control signal in response to a combined current signal.

According to a second aspect of the present invention there is provided a power supply arrangement for an injector drive circuit configured to operate in an energy recovery mode, the power supply arrangement receiving an input voltage and including: voltage boost means for increasing the input voltage to a power supply output voltage, the voltage boost means including a three-phase boost system including first, second and third inductors; switch means operable between open and closed states to control current flow through said voltage boost means and a primary controller for generating at least one control signal for the switch means to control switch status, wherein the primary controller includes a predictive control algorithm for receiving at least one input signal that is representative of an injection running condition and for adjusting at least one parameter of the at least one control signal in dependence upon the injection running condition, thereby to regulate the power supply output voltage.

The injector drive circuit is typically of the type intended for use with an injector bank arrangement, with each bank including at least first and second injectors arranged in parallel with one another. An example of such an injector arrangement is described in our co-pending European patent applications, EP 1400676 and EP 1400677. Each of the injectors of the arrangement typically has a piezoelectric actuator. The invention is equally applicable, however, to other types of injector which have generally capacitive-like properties, and particularly when operating in an energy-recovery mode.

It is a particular advantage of the invention that a substantially constant output voltage is provided by the power supply arrangement due to the primary controller assuming control of switch status. Problems are encountered when using known power supply circuits in injector drive circuits of the aforementioned type, due to the power supply circuits being turned off, and then abruptly turned on again, as they react to a feedback voltage from the power supply output terminals.

The benefit of the first aspect of the present invention is that the primary controller is also responsible for other control algorithms of the engine, for example the injection control algorithm, and so at any instant the primary controller can 'predict' what PWM switch control function is required to stabilise the output voltage due to it having information available about current and imminent injection running condition. This may be achieved through direct control of the switch means, or through indirect control of the switch means via a PWM controller. For example, the switch means may include an ON/OFF switch and the primary controller may provide at least one PWM switch control signal directly to the ON/OFF switch.

The primary controller is also responsible for modifying control of the PWM controller, for the purpose of controlling operation of the power supply switch.

The predictive control algorithm is preferably configured so as to provide an over-ride control signal for the PWM controller to suppress normal functioning of the PMW controller, other than in an idle condition.

The predictive control algorithm may be further arranged to receive a voltage feedback signal that is indicative of the power supply output voltage, said control algorithm including means for comparing the voltage feedback signal with a predicted power supply output voltage for the injection running condition, whereby the control signal for the switch means is adjusted in response to said comparison indicating a discrepancy.

It may be advantageous for a PWM controller to be implemented in that this provides an extra degree of safety against an over-current flow through the ON/OFF switch. A PWM controller typically has a faster response time than a microprocessor (i.e. the primary controller). Thus, if an excessive current flows through the ON/OFF switch, the PWM controller will react more quickly to the excessive current feedback signal so as to open the ON/OFF switch and prevent further current increase and damage.

Typically, the current combiner means is a summing point in the electrical circuit wiring.

According to a third aspect of the present invention, there is provided a method of supplying a regulated output voltage to an injector drive circuit configured to operate in an energy recovery mode, the method including receiving a first input voltage and increasing the input voltage to an output voltage through voltage boost means, wherein the voltage boost means includes a three-phase boost system including first, second and third inductors, controlling a switch means operable between open and closed states, so as to control current flow through said voltage boost means, receiving at least one input signal that is representative of an injection running condition at a primary controller, wherein the step of controlling the switch means includes generating at least one control signal for the switch means by means of a switch control algorithm operating on the primary controller, said controlling step including adjusting at least one parameter of the at least one control signal in dependence upon said injection running condition.

Other preferred features of the present invention are set out in the appended dependent claims.

A still further aspect of the invention relates to a control system for an injector of an internal combustion engine, wherein the control system includes a power supply arrangement and a primary controller (e.g. a primary microprocessor), wherein the primary controller is provided with both an injection control algorithm for controlling injection by the injector and also a predictive control algorithm for receiving at least one input signal that is representative of an injection running condition and for adjusting at least one parameter of a power supply control signal for the power supply arrangement in dependence upon the injection running condition. Conveniently, the injection running condition may be derived from an output signal or data received from the injection control algorithm.

### Brief Description of the Drawings

The invention will now be described, by way of example only, with reference to the accompanying drawings in which:
Figure 1 is a circuit diagram of an injector drive circuit including a plurality of piezoelectrically operable fuel injectors;
Figure 2 is a schematic diagram of a power supply arrangement for use with the injector drive circuit in Figure 1;
Figure 3 shows a power supply arrangement for use with the injector drive circuit in Figure 1;
Figure 4 shows another power supply arrangement;
Figure 5 shows a power supply arrangement in accordance with a first aspect of the present invention;
Figure 6 shows a power supply arrangement including a three phase voltage booster in accordance with a second aspect of the present invention; and
Figure 7 shows a power supply arrangement similar to that shown in Figure 6.

### Detailed Description of Preferred Embodiments

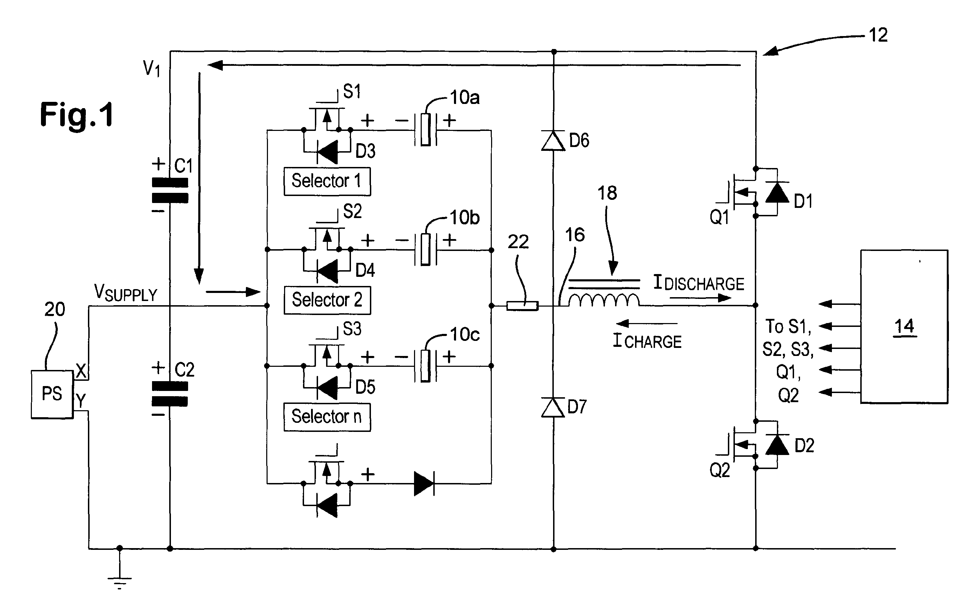

Referring to Figure 1, an injector arrangement for use in a compression ignition internal combustion engine includes a 'bank' of three piezoelectrically actuable injectors 10a, 10b, 10c. The bank of piezoelectric injectors may be one of two identical injector banks (only one of which is shown in Figure 1) in a six cylinder engine, with each injector 10a, 10b, 10c of one bank delivering fuel to a different one of three engine cylinders, and each injector of the other bank delivering fuel to a different one of three other engine cylinders. The arrangement and operation of the second injector bank is substantially identical to the first, and so only the first injector bank is shown in Figure 1 and described in detail below.

Each of the injectors 10a, 10b, 10c is of the negative-charge displacement type in which a piezoelectric actuator stack is discharged to cause a valve needle of the injector to lift, as described previously. Subsequent charging of the piezoelectric actuator causes the valve needle to seat. Each individual injector is selected for injection under the control of an injector drive circuit, referred to generally as 12. The injector drive circuit 12 includes first, second and third select switches, S1, S2, S3 respectively, each one of which is operatively connected to a respective one of the injectors 10a, 10b, 10c to permit independent control thereof. First and second charge/discharge switches, Q1, Q2, are operatively connected to the injectors 10a, 10b, 10c of a given bank so as to control injection by any one of them, depending on which is selected. Energy is transferred to and from the piezoelectric stack so as to initiate and terminate injection by the selected injector using the charge/discharge switches Q1, Q2.

A control arrangement for controlling operation of the drive circuit includes a microprocessor and memory, or microcontroller 14, of an Engine Control Module (ECM). As indicated in Figure 1, the microcontroller 14 is configured to provide control signals for the select switches S1, S2, S3 and the charge/discharge switches Q1, Q2 so as to initiate a discharge operation (the discharge mode) in which the selected injector is opened. The microcontroller 14 is also configured to provide control signals for the charge/discharge switches Q1, Q2 so as to initiate a charging operation (the charging mode) in which the selected injector is closed. First and second energy store capacitors C1, C2 are provided for storing energy during an 'energy recovery' or 'recirculation' phase, which is conducted during both the discharge and the charge modes of operation, as described further below.

The drive circuit 12 also includes a voltage input for receiving a voltage, V_{SUPPLY}, from a power supply unit 20. The drive circuit 12 employs a half H-bridge configuration having a middle circuit branch 16 which serves as a bi-directional current path. The bi-directional current path 16 includes an inductor 18 which is coupled in series with the parallel connection of the injectors 10a, 10b, 10c. Each injector has the electrical characteristics similar to those of a capacitor, with its piezoelectric actuator stack being chargeable to hold a voltage which is the potential difference between the charge (+) and discharge (-) terminals of the injector. Charging and discharging of each injector is achieved by controlling the current flow through the bi-directional current path 16 by means of the microcontroller 14.

Each switch Q1, Q2 has a respective recirculation diode D1, D2 connected across it to allow a recirculation current to return to the energy storage capacitors C1, C2 during the energy recovery modes of operation. By way of example, when the select switch S 1 associated with the first injector 10a is activated (closed) in conjunction with the charge/discharge switch Q2 being closed, current flow is permitted in a discharge direction through the selected injector 10a. A diode D3 is connected in parallel with the select switch S1 to allow current flow in the charge direction during a charging mode of operation. Similarly, diodes D4 and D5 are connected in parallel with respective ones of the selects switches S2 and S3 for the second and third injectors 10b, 10c.

A further diode D6 is provided between the bi-directional current path 16 on the injector side of the inductor 18 and the positive terminal of the second energy storage capacitor C2. Another diode D7 is provided between the negative terminal of the first energy storage capacitor C1 and the bi-directional current path 16 on the injector side of the inductor 18.

A current flow sensing and control means 22 is connected within the bi-directional current path 16 to sense current flow, compare the sensed current with predetermined first and second current thresholds, I₁ and I₂ respectively, and generate output signals accordingly. I₁ represents a peak current threshold and I₂ represents a recirculation current threshold. Both of the current threshold values, I₁ and I₂, are stored in the microcontroller and memory 14, along with a charge voltage threshold (V_{CHARGE}) and a discharge voltage threshold (V_{DISCHARGE}). A voltage sensing means (not shown) is also provided to sense the voltage, V_{SENSE}, across the injector that is selected for injection.

The microcontroller 14 includes control logic embodied in the form of a software algorithm for receiving the output of the current sensing and control means 22, the sensed voltage, V_{SENSE}, from the positive terminal (+) of the injectors, and the various output signals provided from other algorithms of the microcontroller 14. The software algorithm generates control signals for each of the charge/discharge switches, Q1, Q2 and each of the injector select switches S1, S2 and S3, and is referred to as the charge/discharge control algorithm.

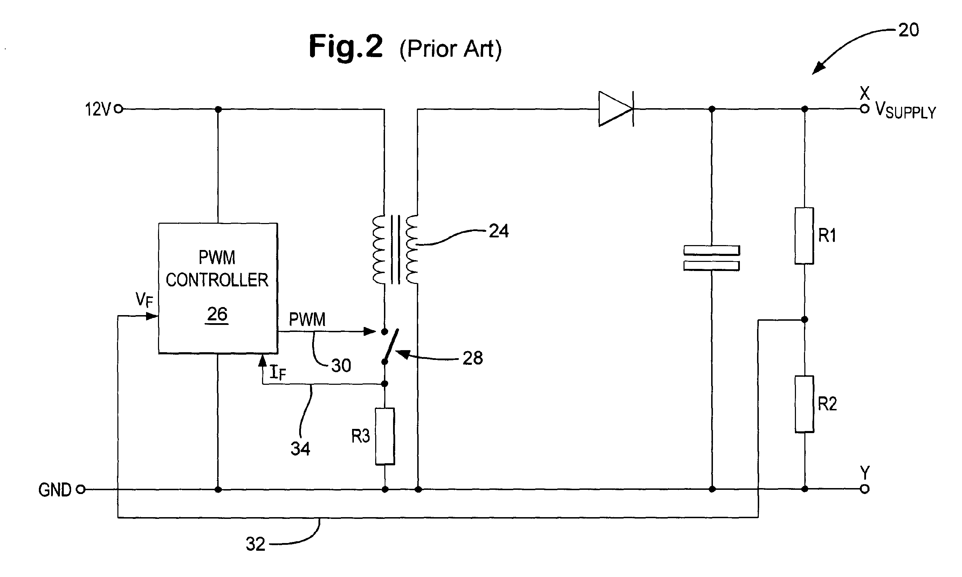

The drive circuit 12 is arranged to receive the input voltage, V_{SUPPLY}, from the power supply circuit 20. In known injector drive circuits, the power supply circuit 20 takes the form of what is referred to as a Switch Mode Power Supply (SMPS) having the circuit layout shown in Figure 2.

Referring to Figure 2, an input voltage (typically battery voltage) is increased to a higher step-up voltage, V_{SUPPLY}, via a step up transformer (DC/DC converter) 24. The step-up voltage, V_{SUPPLY}, is typically of the order of 100-200V and, as can be seen in Figure 1, is applied to the second energy storage capacitor C2 of the drive circuit 12. The SMPS 20 is operable to regulate the output or supply voltage, V_{SUPPLY}, across SMPS output terminals X, Y so that the voltage maintains a substantially constant level at all times. The voltage output, V_{SUPPLY}, is measured across sense resistors R1, R2 and a voltage feedback signal, V_{F}, which is representative of the supply voltage, V_{SUPPLY}, is fed back to a PWM controller 26 forming part of the SMPS 20. The SMPS 20 includes a power supply switch 28 in series with a further sense resistor R3 and a current signal, IF, representing current flow through the power supply switch 28, is fed back to the PWM controller 26. The voltage feedback signal, V_{F}, is denoted by 32 and the current signal, IF, is denoted by 34.

The PWM controller 26 provides a PWM switch control signal 30 to activate and deactivate the power supply switch 28 in accordance with a PWM signal duty cycle and frequency. The duty cycle and frequency of the PWM switch control signal 30 are adjusted in response to the voltage feedback signal, V_{F}, and the current signal, IF, which provides a reference current signal. It is an important aspect of SMPS operation that the power supply switch 28 is operated under the control of the PWM controller 26 in response to the voltage feedback signal, V_{F}, from the output terminals X, Y.

It has now been recognised that the implementation of the SMPS 20 in Figure 2 with the injector drive circuit 12 of Figure 1 has disadvantages due to the operational characteristics of the SMPS. The problem is explained in further detail below by considering the discharge and charge modes of operation of the injector drive circuit 12. Referring again to Figure 1, the injector drive circuit 12 operates in a discharge mode to open a selected one of the fuel injectors 10a, 10b, 10c, whereby the piezoelectric stack of the selected injector is contracted to cause the injector valve needle to lift from its seating. The drive circuit 12 operates in a charge mode to close the fuel injectors, whereby the piezoelectric stack of the selected one of the injectors 10a, 10b, 10c is extended to cause the injector valve needle to re-seat. In order to operate in the discharge mode, the second switch Q2 is activated (closed). Additionally, one of the injector select switches S1, S2, S3 is activated to select a desired one of the injectors for injection.

Upon activation of the second switch Q2, a discharge current, I_{DISCHARGE}, flows from the injector 10a, through the inductor 18, through the closed switch Q2 and back to the negative terminal of capacitor C2. As the select switches S2 and S3 remain open, and due to the direction of their associated diodes, D4 and D5 respectively, substantially no current is able to flow through the second and third injectors 10b, 10c.

The current sensing and control means 22 monitors the current flow through the bi-directional path 16 as it builds up and, as soon as the peak current threshold I₁ is reached, an output signal is generated to initiate de-activation (opening) of the second switch Q2. At this point, the current that is built up in the inductor 18 recirculates through the diode D 1 associated with the first (open) switch Q1. As a consequence, the direction of current flow through the inductor 18 and the selected one of the injectors 10a does not change. This is a recirculation phase of the discharging mode of operation of the drive circuit 12, during which current flows from the positive side of the capacitor C2, through the selected switch S1, through the selected injector 10a, through the current sensing and control means 22, through the inductor 18, and finally through the diode D1 associate with the (open) charge switch Q1 and into the positive side of capacitor C1. Thus, energy from the inductor 18 and the selected one of the injectors 10a is transferred to the capacitor C1 during the recirculation phase for energy storage purposes. The current sensing and control means 22 monitors the recirculation current, so that when the recirculation current has fallen below the recirculation current threshold, I₂, a signal is generated to reactivate the second charge/discharge switch Q2 to continue the discharge operation.

By monitoring the voltage across the selected injector 10a using voltage sensing means (not shown), the cycle of current build-up and recirculation continues until the appropriate discharge voltage level (V_{DISCHARGE}) across the selected injector 10a has been achieved. In this discharge cycle, the capacitor C2 provides energy, while capacitor C1 receives energy for storage. Once the appropriate discharge voltage threshold, V_{DISCHARGE}, is achieved, the half H-bridge circuit 12 is deactivated until a charge cycle is initiated.

During the charge phase of operation, a similar technique is implemented to recover energy from the inductor 18 for storage on the second capacitor C2. To charge the previously selected injector 10a, the select switch S1 is reactivated to close again so that a bi-directional current flows through the injector 10a during the charging mode. The second and third switches S2 and S3 remain open. The majority of charge current, I_{CHARGE}, will flow through the previously discharged injector 10a, as this injector is at a much lower voltage (V_{DISCHARGE}).

The current flow sensing and control means 22 monitors the current build-up and as soon as the peak current threshold, I₁, is reached, the microcontroller 14 generates a control signal to open the first switch Q1. At this point, the current that has built up in the inductor 18 recirculates through the diode D2 associated with the second (open) switch Q2. This is the recirculation phase of the charging mode, during which the direction of current flow through the selected injector 10a does not change.

During the recirculation phase, current flows from the negative side of the capacitor C2, through the diode D2, through the inductor 18 and the current sensing and control means 22, through the injectors 10a, 10b, 10c, through the diodes D3, D4, D5 and into the positive terminal of the capacitor C2. Thus, energy is transferred from the inductor 28 and the injectors 10a, 10b, 10c to the energy storage capacitor C2. The current sense circuitry monitors the recirculation current and, when the recirculation current has fallen below the recirculation current threshold I₂, the first switch Q1 is closed to continue the charging process. Once the appropriate charge voltage level has been achieved (V_{CHARGE}), the half H-bridge drive circuit 12 is deactivated until a subsequent discharge phase is initiated.

As mentioned previously, it is due to the energy recovery aspect of the drive circuit 12 that a problem occurs within the SMPS 20. As a result of energy being returned to the capacitor C2, an increased voltage is sensed across the voltage output terminals X, Y of the SMPS 20 and, as a result of the PWM controller's response to the voltage feedback signal, V_{F} , the PWM controller 26 switches off. For the version of the drive circuit 12 in Figure 1, this is a problem at the end of the charging phase of operation, but other drive circuit configurations may be used for which energy recovery during the discharge phase is a problem for the same reason. It is a particularly disadvantageous consequence of the SMPS being switched off, that it is then caused to be switched on abruptly when the voltage across X, Y starts to decrease, resulting in an undesirable overdrive condition.

Our co-pending European patent applications EP 1400676 and EP 1400677 describe different drive circuits in which the aforementioned energy recovery technique may used. The problem is encountered with the use of a conventional SMPS arrangement, such as that shown in Figure 2, including a PWM controller 26 for controlling the power supply switch 28, during the charge and/or discharge phase.

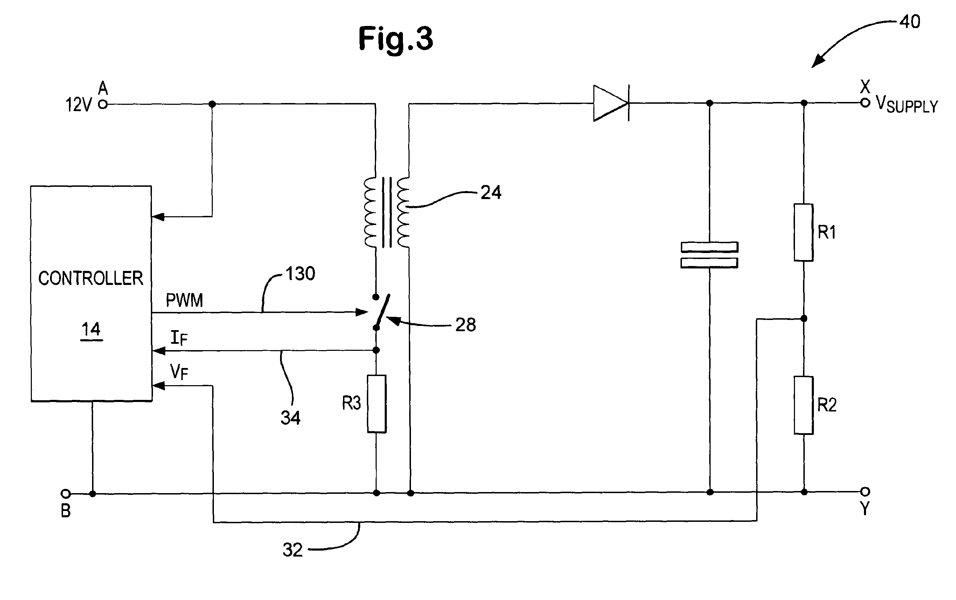

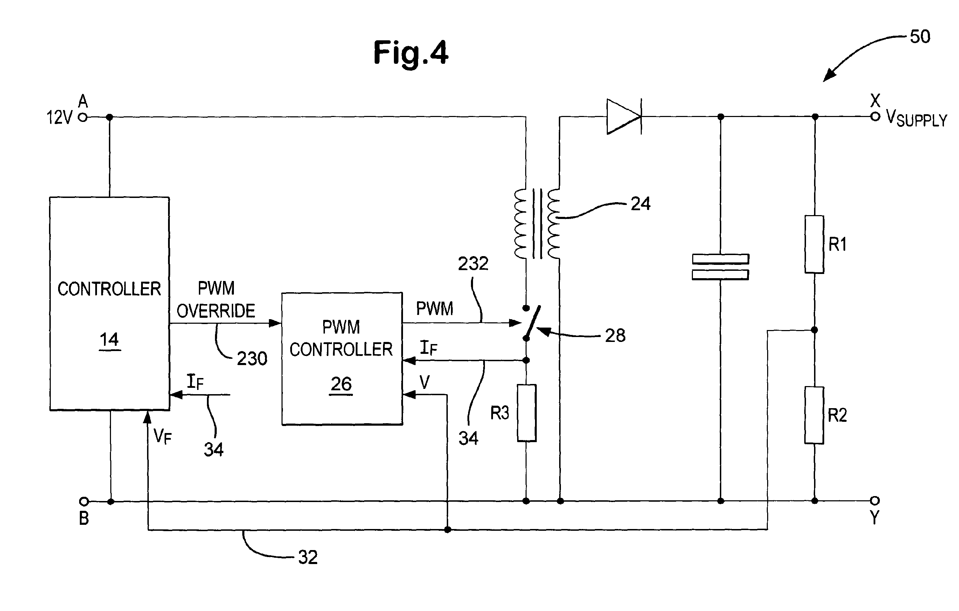

To assist in the understanding of the present invention, the power supply arrangement or circuits shown in Figures 3 and 4 will now be described.

The conventional SMPS 20 can be replaced by the power supply arrangement or circuit 40 of the type shown in Figure 3. As described previously, the microcontroller 14 is provided to control the ON/OFF switching cycle of the charge/discharge and select switches Q1, Q2, S1, S2, S3 of the injector banks (the control signals for the switching cycle are shown only in Figure 1). The microcontroller 14 is also configured to provide an essential control function for the power supply circuit 40 in accordance with injection information which is available to the microcontroller 14 for other purposes, for example injection control. The microcontroller 14 provides predictive control of the power supply switch 28, as opposed to the reactive or feedback control of the known SMPS 20 implementation. By utilising the microcontroller 14 to control the power supply switch 28 in a predictive fashion, a substantially constant output voltage, V_{SUPPLY}, can be supplied to the injector drive circuit 12, whilst avoiding the aforementioned disadvantageous effects.

Referring to Figure 3 in further detail, the power supply circuit 40 includes voltage input terminals A, B, across which an input voltage (for example, battery voltage at 12V) is supplied. The input voltage is increased to a higher voltage by a voltage boost means in the form of a step-up transformer 24. The step-up transformer 24 is connected in series with a switch means in the form of an ON/OFF power supply switch 28. A sense resistor R3 is provided in series with the ON/OFF power supply switch 28. A current feedback signal, IF, is provided to the microcontroller 14 to provide a measure of current flow through the power supply switch 28. The current feedback signal, IF, is provided as a protective feature, so that the microcontroller 14 can respond to an excessively high current flow through the power supply switch 28, if necessary. To clarify, the feedback current signal, IF, is not provided for the purpose of controlling activation and deactivation of the ON/OFF power supply switch 28 under normal circumstances.

A voltage feedback signal, V_{F}, is also provided from sense resistors R2, R3 of the power supply circuit 40 and is supplied to the microcontroller 14.

The microcontroller 14 is typically provided with a first software algorithm for controlling injection (the injection control algorithm), a second software algorithm for controlling the charge/discharge and select switches Q1, Q2, S1, S2, S3 (a charge/discharge control algorithm) and a third software algorithm for controlling the power supply switch 28 (a PWM control algorithm). The injection control algorithm receives input signals (for example driver demand, engine speed, temperature) and calculates control signals for injection accordingly.

The injection control algorithm also outputs at least one signal that is representative of the injection running condition (i.e. a characteristic of the injection event that is about to take place). This signal is supplied to the PWM control algorithm which, in response to the injection running condition input, utilises pre-stored data maps or look-up tables to determine an appropriate PWM switch control signal 130 to maintain the output voltage, V_{SUPPLY}, at a substantially constant level for the forthcoming injection event. Data stored in the maps and/or look-up tables may, for example, relate engine speed, rail pressure, injection quantity, number of injections in an injection sequence and/or injector age to one or more characteristics of the PWM control signal.

As an alternative to using data maps and/or look-up tables, the microcontroller 14 may determine the appropriate PWM switch control signal 130 dynamically, in response to an injection running condition output by the injection control algorithm.

The power supply circuit 40 of Figure 3 therefore operates differently from the known SMPS 20, in which a hardware component in the form of a PWM controller generates a PWM switch control signal for the switch 28 (i.e. signal 30, as shown in Figure 2) in response to the measured voltage across the output terminals X,Y. In contrast, Figure 3 relies on software implemented control of the power supply switch 28 to regulate the output voltage of the circuit.

It may be beneficial for the voltage feedback signal, V_{F}, to be utilised by the PWM control algorithm so as to provide a means for adjusting the predicted PWM control signal 130 in certain circumstances. For example, the voltage feedback signal, V_{F}, may be monitored in software to check whether or not the predetermined output voltage is being maintained accurately through software control. If a discrepancy is observed, the PWM control algorithm is configured to adjust the PWM switch control signal 130 accordingly. Typically, this check may be initiated every 10-25 injection events or so, and not for every injection event. It will be appreciated, therefore, that although Figure 3 shows the voltage feedback signal, V_{F}, being supplied to the microcontroller 14, this feedback signal, V_{F}, is not essential to control of the power supply switch 28. Primary control of the power supply switch 28 is effected by means of injection data which is available to the microcontroller 14 for other purposes e.g. injection demand and timing.

Referring now to Figure 4, in the power supply circuit 50 illustrated therein the PWM controller is not removed altogether, but instead the microprocessor 14 is configured to operate in conjunction with a PWM controller 26. Similar components of the power supply circuit 50 to those shown in Figure 3 are identified by like reference numerals, and so will not be described in further detail.

In Figure 4, the switch means of the power supply circuit therefore includes the operative connection of a PWM controller 26 and an ON/OFF power supply switch 28. The microcontroller's PWM control algorithm provides a PWM control signal 230 to the PWM controller 26, rather than providing a PWM switch control signal directly to the ON/OFF switch 28 itself. Again, the circuit in Figure 4 differs from the known SMPS 20, where the PWM switch control signal 30 is generated under the hardware control of the PWM controller in response to the voltage feedback signal, V_{F}.

The PWM control signal 230 operates as an over-ride control signal, or 'modifying' control signal, to suppress normal functioning of the PWM controller 26. The PWM control algorithm receives data representative of the injection running condition and the predicts an appropriate PWM control signal 230 by reference to data maps or look-up tables. The PWM control signal 230 is received by the PWM controller 26, which in response provides a PWM switch control signal 30 to the ON/OFF power supply switch 28.

Although the voltage feedback signal, V_{F}, is provided to the microcontroller 14 in Figure 4, in practice it is not essential to provide this signal for PWM control purposes. The benefit of providing the voltage feedback signal, V_{F}, to the microcontroller 14, and in particular to the PWM control algorithm, is that adjustment can be made to the predicted PWM control signal 230 if the voltage feedback signal, V_{F}, indicates a discrepancy between the expected voltage supply level (i.e. as predicted by the predictive control algorithm) and the measured voltage supply level. The adjustment check may be made only once every few injection events, or so.

It is one benefit of the Figure 4 circuit that additional safety is provided by providing the current feedback signal, IF, to the PWM controller 26. In the event that the current feedback signal, IF, exceeds a predetermined safe current level, the PWM controller 26 automatically shuts down, thus opening the power supply switch 28. As the speed of response of the PWM controller 26 in this respect is faster than that of the microcontroller 14, automatic shut-off can be achieved more rapidly compared to the embodiment of Figure 3 where the microcontroller 14 receives the current feedback signal I_{F}.

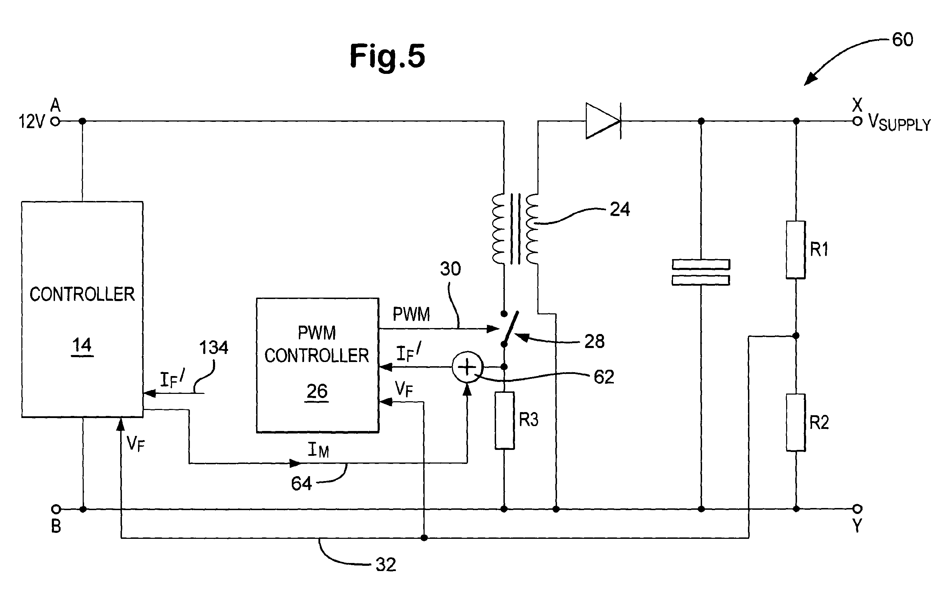

A power supply circuit 60 in accordance with a first aspect of the present invention is shown in Figure 5. The power supply circuit 60 is similar to that shown in Figure 4, and similar parts are denoted with like reference numerals. In Figure 5, however, there is an additional current summing point (identified at 62) in the circuit wiring, at which the feedback current signal, IF, is summed with a positive modifying current signal (represented as I_{M}). In this aspect of the invention, the control signal for the switch means 26, 28 is therefore the positive modifying current signal, I_{M}, 64 provided by the microcontroller 14.

From the summing point 62, a summed current feedback signal, IF', is fed back to the PWM controller 26. The PWM controller 26 therefore always "sees" a larger feedback current signal IF' than actually flows through the step-up transformer 24. The PWM controller 26 receives the voltage feedback signal, V_{F}, from the sense resistors, R1, R2, and adjusts the PWM switch control signal 30 in response thereto, with the reference current being provided by the summed current feedback signal, IF' from the summing point 62. This prevents the PWM controller 26 from over-driving the power supply switch 28 (for example by increasing the duty cycle and/or frequency).

Although in this circuit 60 the PWM controller 26 is arranged electrically in a similar position as in the known SMPS circuit (as shown in Figure 2), it will be appreciated that regulation of the output voltage is nonetheless under the control of the microcontroller 14, and not under the control of the PWM controller 26 directly. This is due to the microcontroller 14 generating the modifying current signal, I_{M}, in dependence upon an injection running condition, which in turn determines the PWM switch control signal 30.

In practice, it may be advantageous for the microcontroller 14 to assume control of the PWM controller 26 (i.e. by providing the modifying current signal, I_{M}) only in certain circumstances. For example, under idle conditions the microcontroller 14 may generate a zero modifying current signal, I_{M} , so that the PWM controller 26 provides the PWM control signal in the usual known manner. In this aspect, the invention is therefore only implemented for part-time injector running.

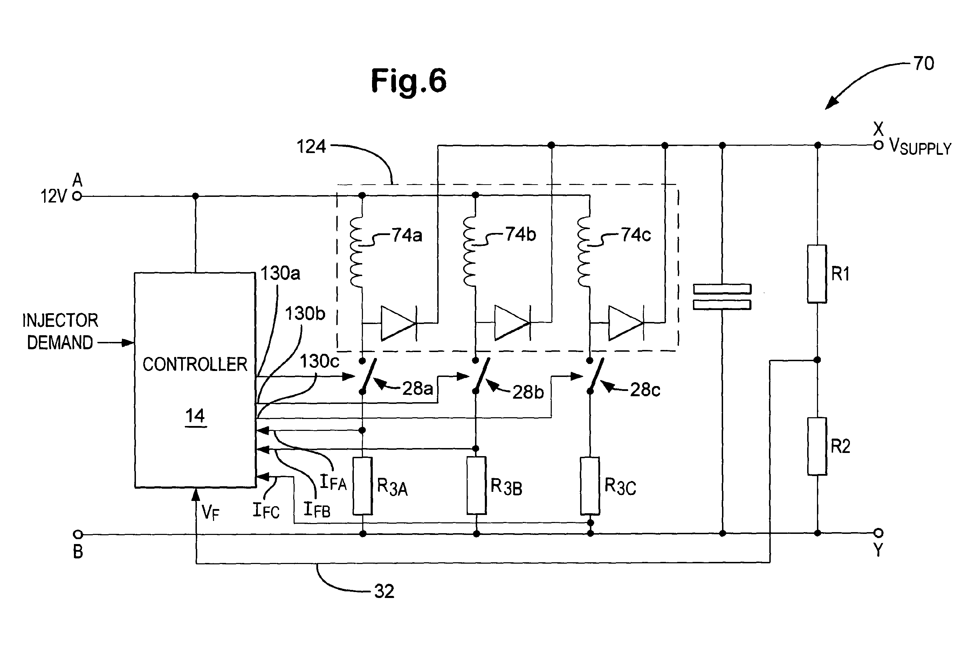

A power supply circuit 70 in accordance with a second aspect of the present invention is shown in Figure 6. The power supply circuit 70 is similar to that shown in Figure 3, in that the PWM controller 26 is removed altogether. In Figure 6, the step-up voltage means takes the form of a three-phase boost system, as indicated in dotted lines 124. The three-phase boost system includes a parallel arrangement of first, second and third boost inductors 74a, 74b, 74c. One side of each of the boost inductors 74a, 74b, 74c is connected to one side of a respective power supply switch 28a, 28b, 28c and the other side of each boost inductor is connected to the high voltage rail. The microcontroller 14 provides first, second and third PWM switch control signals, 130a, 130b, 130c, for each of the first, second and third power supply switches, 28a, 28b, 28c, respectively. The first, second and third PWM switch control signals, 130a, 130b, 130c, are adjusted in dependence upon the current injection condition by means of data which is available to the microcontroller 14 for other purposes, as described previously.

A current feedback signal, I_{FA}, I_{FB}, I_{FC}, is taken from each of first, second and third sense resistors, R_{3A}, R_{3B}, R_{3C}, arranged in series with the first, second and third switches 28a, 28b, 28c, respectively. Each branch of the three phase boost system (i.e. each series connection of sense resistor, power supply switch and boost inductor) is independently controlled by the microcontroller 14, although control of each is synchronised so as to achieve the desired regulated output voltage across the voltage terminals, X, Y.

The three-phase boost system of Figure 6 has an advantageous smoothing effect on the average input current to the power supply circuit 70, and so may have advantages over the use of a step-up transformer.

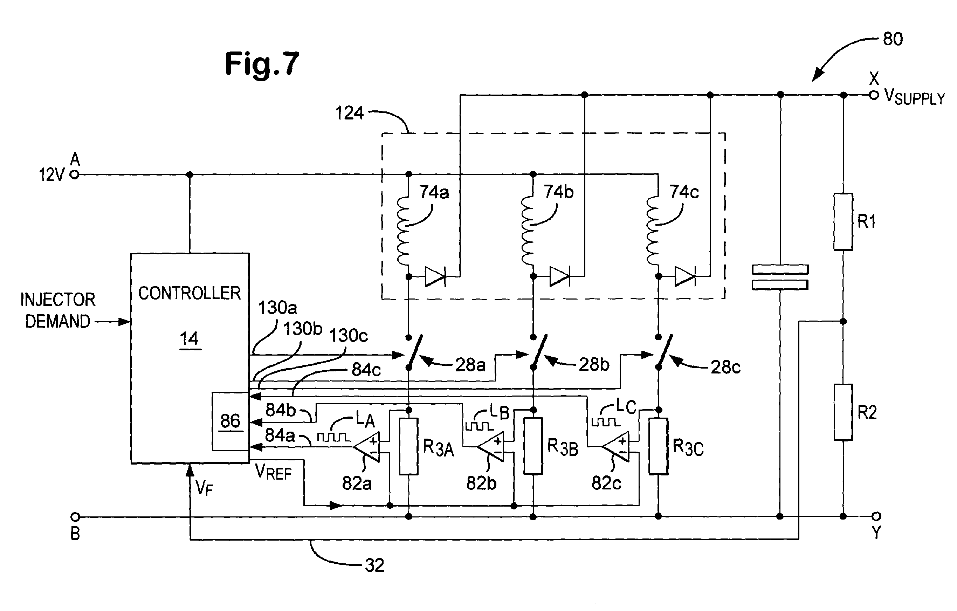

Referring now to Figure 7, there is shown an alternative circuit 80 to that shown in Figure 6 where similar parts are denoted with like reference numerals. The circuit 80 includes additional hardware circuit components (i.e. voltage comparators 82a, 82b and 82c) which can be used in place of certain functions provided by the microcontroller 14 to reduce processing time. More particularly, the circuit 80 comprises first, second and third comparators 82a, 82b and 82c across the respective first, second and third sense resistors R_{3A}, R_{3B}, R_{3C}.

A voltage reference, V_{REF}, is generated by the microcontroller 14 using, for example, a PWM microcontroller channel and a filter. V_{REF} is used as a peak current setting point for the comparators 82a, 82b and 82c. The comparator outputs provide feedback to the microcontroller 14 by means of logic signals L_{A}, L_{B} and L_{C} when the current through the sense resistors R_{3A}, R_{3B}, R_{3C}, reaches a predetermined level set by V_{REF}. In this manner, the microcontroller 14 is able to detect the occurrence of logic edges, rather than measuring and comparing voltages which uses more processing time.

The logic signals L_{A}, L_{B} and L_{C} are fed, via comparator lines 84a, 84b and 84c into a separate block 86 of the microprocessor 14 to drive the ON and OFF switches 28a, 28b and 28c via the respective lines 130a, 130b and 130c. The block 86 of the microcontroller 14 comprises a time processor unit (TPU) which is able to detect, and react to, fast edges in the logic signals L_{A}, L_{B} and L_{C} and thus enables fast control of the power supply switches 28a, 28b and 28c.

It will be appreciated from the foregoing description that a significant aspect of the present invention is the predictive nature of power supply switch control in software algorithm, as opposed to the more dynamic feedback nature of PWM hardware control utilised in known SMPS units.

## Claims

1. A power supply arrangement (60, 70, 80) for an injector drive circuit (12) configured to operate in an energy recovery mode, the power supply arrangement receiving an input voltage and including:
voltage boost means (24, 124) for increasing the input voltage to a power supply output voltage (V_{SUPPLY});
switch means (28; 28a, 28b, 28c) operable between open and closed states to control current flow through said voltage boost means (24, 124), the switch means including a PWM controller (26) and an ON/OFF switch (28); and
a primary controller (14) for generating at least one control signal (130; 230, 64, 130A, 130B, 130C) for the switch means to control switch status,
wherein the primary controller (14) includes an injection control algorithm for controlling injection, wherein the injection control algorithm is arranged to generate an indication of an injection running condition, and a predictive control algorithm for receiving at least one input signal that is representative of the injection running condition and for adjusting at least one parameter of the at least one control signal in dependence upon the injection running condition, thereby to regulate the power supply output voltage (V_{SUPPLY}),
wherein the predictive control algorithm provides a control signal (230) for the PWM controller (26) in dependence upon the injection running condition, and wherein the PWM controller (26) is configured to provide a PWM switch control signal (232) for the ON/OFF switch (28) in response to said control signal (230),
wherein the PWM switch control signal (232) is adjusted in response to the current feedback signal (IF) exceeding a predetermined safe current level, the PWM controller (26) being arranged to receive a current feedback signal (IF) indicative of current flow through the ON/OFF switch (28), and
wherein the predictive control algorithm is further configured so as to provide a modifying current signal (I_{M}), the power supply arrangement further comprising:
a current combiner means (62) for combining said current feedback signal (IF) with the modifying current signal (I_{M}), whereby the PWM controller (26) generates the PWM switch control signal (30) in response to a combined current signal.

2. A power supply arrangement for an injector drive circuit (12) configured to operate in an energy recovery mode, the power supply arrangement receiving an input voltage and including:
voltage boost means (24, 124) for increasing the input voltage to a power supply output voltage (V_{SUPPLY}), the voltage boost means including a three-phase boost system (124) including first, second and third inductors (74a, 74b, 74c);
switch means (28; 28a, 28b, 28c) operable between open and closed states to control current flow through said voltage boost means (24, 124), and
a primary controller (14) for generating at least one control signal (130; 230, 64, 130A, 130B, 130C) for the switch means to control switch status,
wherein the primary controller (14) includes a predictive control algorithm for receiving at least one input signal that is representative of an injection running condition and for adjusting at least one parameter of the at least one control signal in dependence upon the injection running condition, thereby to regulate the power supply output voltage (V_{SUPPLY}).

3. The power supply arrangement as claimed in claim 2, wherein the primary controller (14) includes an injection control algorithm for controlling injection,
wherein the injection control algorithm is arranged to generate an indication of the injection running condition.

4. The power supply arrangement as claimed in claim 2 or claim 3, wherein switch means includes an ON/OFF switch (28; 28a, 28b, 28c) and wherein the primary controller (14) is configured to provide a PWM switch control signal directly to the ON/OFF switch (28; 28a, 28b, 28c).

5. The power supply arrangement as claimed in claim 4, further comprising comparing means for comparing current flow through the ON/OFF switch (28a, 28b, 28c) with a predetermined peak current so as to provide the PWM switch control signal.

6. The power supply arrangement as claimed in claim 5, wherein the comparing means is provided by a microcontroller function (86).

7. The power supply arrangement as claimed in claim 5, wherein the comparing means includes a hardware comparator (82a, 82b, 82c).

8. The power supply arrangement as claimed in claim 1, wherein the predictive control algorithm is configured so as to provide an over-ride control signal (230) for the PWM controller (26) to suppress normal functioning of the PMW controller (26), other than in an idle condition.

9. The power supply arrangement as claimed in claim 1 or claim 4, wherein the PWM switch control signal (30; 130, 232) has an adjustable duty cycle and frequency.

10. The power supply arrangement as claimed in any one of claims 1 to 9, wherein the predictive control algorithm is arranged to receive a voltage feedback signal (V_{F}) that is indicative of the power supply output voltage (V_{SUPPLY}) and includes means for comparing the voltage feedback signal with a predicted power supply output voltage for the injection running condition, whereby the control signal for the switch means (28; 28, 26; 28a, 28b, 28c) is adjusted in response to said comparison indicating that there is a discrepancy.

11. The power supply arrangement as claimed in claim 1, wherein the voltage boost means includes a voltage step-up transformer (24).

12. A control system for controlling operation of at least one injector of an internal combustion engine, the control system comprising;
a power supply arrangement as claimed in any one of claims 1 to 11, and
a primary controller (14), wherein the primary controller is provided with an injection control algorithm for controlling injection by the injector and a predictive control algorithm for receiving at least one input signal that is representative of an injection running condition and for adjusting at least one parameter of the power supply control signal in dependence upon the injection running condition, thereby to regulate the power supply output voltage (V_{SUPPLY}) .

13. A method of supplying a regulated output voltage to an injector drive circuit configured to operate in an energy recovery mode, the method including:
receiving a first input voltage and increasing the input voltage to an output voltage through voltage boost means (24; 124), the voltage boost means including a three-phase boost system (124) including first, second and third inductors (74a, 74b, 74c);
controlling a switch means (28; 28a, 28b, 28c), operable between open and closed states, so as to control current flow through said voltage boost means (24; 124);
receiving at least one input signal that is representative of an injection running condition at a primary controller (14);
wherein the step of controlling the switch means (28; 28a, 28b, 28c) includes generating at least one control signal (130, 230, 64) for the switch means by means of a switch control algorithm operating on the primary controller (14), said controlling step including adjusting at least one parameter of the at least one control signal in dependence upon said injection running condition.

14. The method as claimed in claim 13, including the further step of controlling injection using an injection control algorithm operating on the primary controller (14).
